# EUROPÄISCHE PATENTSCHRIFT

(11) **EP 2 196 594 B1**
(45) Veröffentlichungstag und Bekanntmachung des Hinweises auf die Patenterteilung: **24.04.2019**
(21) Anmeldenummer: 09178519.6
(22) Anmeldetag: 09.12.2009
(51) Int. Cl.: H01L 31/042, H01L 31/048, E04D 3/02, F24S 20/00

(54) **BAUELEMENT ZUR VERKLEIDUNG VON GEBÄUDEN**
ELEMENT FOR CLADDING BUILDINGS
ELÉMENT DE REVÊTEMENT DE BÂTIMENTS

(30) Priorität: 09.12.2008 CH 19382008
(43) Veröffentlichungstag der Anmeldung: 16.06.2010
(73) Patentinhaber: Gisler, Markus, 4704 Niederbipp (CH)
(72) Erfinder: Gisler, Markus, 4704, Niederbipp (CH); Galliker, Beni, 8037, Zürich (CH); Grossenbacher, Pascal, 4704 Niederbipp (CH)
(74) Vertreter: Rentsch Partner AG

(56) Entgegenhaltungen:
- DE-U- 9 209 228
- FR-A1- 2 465 315

## Beschreibung

### Technisches Gebiet

Die Erfindung betrifft ein Bauelement zur Verkleidung von Gebäuden, insbesondere von Schrägdächern oder Fassaden, gemäss dem Oberbegriff des unabhängigen Patentanspruchs.

### Stand der Technik

Sollen Dächer oder Fassaden von Gebäuden mit Photovoltaik-Modulen ausgerüstet werden, so können diese auf eine bestehende Fassade bzw. ein bestehendes Dach aufgesetzt werden, d.h. sie werden mit einer geeigneten, meist komplizierten Montagekonstruktion auf der Fassade oder der Dachhaut montiert. Die bestehende Dachhaut, beispielsweise eine Ziegeldach, kann weiter genutzt werden und die Photovoltaik-Module müssen keine Dichtungsfunktion übernehmen. Jedoch muss der Montageaufbau jeweils individuell auf ein bestimmtes Dach angepasst werden. Kostenmässig ist diese Methode vor allem bei bestehenden Dächern und Fassaden vorteilhaft.

Alternativ können entsprechend ausgebildete Photovoltaik-Module selber die dichte Verkleidung des Dachs bzw. der Fassade bilden. Diese Möglichkeit ist vor allem bei neuen Gebäuden oder bei grösseren Renovationen vorteilhaft, da die Kosten für die Deckung des Dachs teilweise eingespart und so die gesamten Baukosten gesenkt werden können. Ein weiterer Vorteil einer solchen Lösung ist ein gleichmässigeres optisches Aussehen, und damit eine ästhetisch ansprechende Wirkung.

FR 2465315 offenbart ein Bauelement gemäß dem Oberbegriff des Anspruchs 1 und zeigt ein Photovoltaik-Modul, das in einem Profilrahmen aus Metall eingepasst ist, so dass sich ein plattenförmiges Photovoltaik-Bauelement ergibt. Das Photovoltaik-Modul ist in einer umlaufenden Profilnut des Rahmens dichtend gehalten. Der Profilrahmen ist derart ausgestaltet, dass die Bauelemente wie Ziegel schuppenförmig überlappend verlegt werden können. Die Profilrahmen benachbarter Bauelemente greifen ineinander, so dass sich eine regensichere Dachhaut ergibt. Die Photovoltaik-Bauelemente werden wie herkömmliche Ziegel mit Klammern auf den Dachlatten befestigt. Der Aufbau als kleinformatige Ziegel ist für den Einsatz als Photovoltaik-Modul aus elektrotechnischen Gründen nachteilig.

EP 1060520 zeigt ein Photovoltaik-Bauelement, welches von den Dimensionen her herkömmlichen Photovoltaik-Modulen entspricht, und demnach wesentlich grösser ist als herkömmliche Ziegel. Das gezeigte Photovoltaik-Bauelement weist seitlich einen Profilrahmen auf, der in den Profilrahmen des benachbarten Bauelements greift, und so eine regendichte Verbindung schafft. Das oben liegende Profil weist eine waagrecht liegende Abflussrinne auf, sowie Mittel zur Befestigung des Bauelements auf der Dachkonstruktion. Auf der unten liegenden Seite ist das Profil so ausgestaltet, dass es das Photovoltaik-Modul lediglich stützt, aber nicht auf der das Licht empfangenden Oberseite abdeckt.

EP 1703037 zeigt ein Photovoltaik-Bauelement, bei welchem auf der dem Gebäude zugewandten Seite des Bauelements Abstützvorrichtungen angeordnet sind, welche mit Tragelementen zusammenwirken, die auf einer Unterkonstruktion, beispielsweise den Dachlatten, befestigt werden.

Eine Bauweise mit seitlichen Rahmenprofilen, die ineinander greifen, hat den Vorteil, dass in Fallrichtung das unten liegende Profil eine Abflussrinne bildet, durch die das Regenwasser abfliessen kann. Jedoch hat diese Bauweise den Nachteil, dass das Verlegend der einzelnen Bauelemente zwingend in einer bestimmten waagrechten und senkrechten Reihenfolge erfolgen muss. Bei der Wartung beziehungsweise der Reparatur von einzelnen Bauelementen kann dies zu Problemen führen.

EP 1362967 zeigt ein System, bei welchem jeweils zwischen zwei Reihen nebeneinander liegender Bauelemente in Fallrichtung eine durchgehende, nach oben offene Profilschiene angeordnet ist. Die seitlichen Rahmenprofile greifen in diese Profilschiene ein, so dass sich in Fallrichtung eine durchgehende Abflussrinne und gleichzeitig eine regendichte seitliche Verbindung zwischen den Bauelementen bildet. Einzelne Bauelemente sind so zugänglich, ohne dass die seitlich benachbarten Bauelemente tangiert werden.

Alle oben genannten Verkleidungs-Systeme weisen den Nachteil auf, dass die Bauelemente von unten nach oben verlegt werden müssen, um die notwendige Überlappung der einzelnen Bauelemente herstellen zu können. Bei einem Dach muss also von der Traufe zum First hin gedeckt werden. Zudem sind, im Gegensatz zu kleinformatigen, robusten Ziegeln, die grossformatigen Photovoltaik-Module schwer und nicht begehbar. Für einen Monteur ist die Verlegung solcher Bauelemente deshalb auch bei eher flachen Dächern sehr umständlich und mühsam. Vor allem bei grösseren Photovoltaik-Bauelementen können für die Montage sogar zwei Personen notwendig sein, was die Montagekosten erhöht.

### Aufgabe der Erfindung

Eine Aufgabe der Erfindung ist es, ein Bauelement der eingangs erwähnten Art zur Verfügung zu stellen, insbesondere ein Photovoltaik-Bauelement, das die oben erwähnten und andere Nachteile nicht aufweist.

Eine weitere Aufgabe der Erfindung ist es, ein Bauelement zur Verfügung zu stellen, welches es ermöglicht, ein Schrägdach oder eine Fassade von oben nach unten zu decken.

Eine andere Aufgabe der Erfindung ist es, ein Bauelement zur Verfügung zu stellen, welches es ermöglicht, bei einer fertigen Gebäude-Verkleidung einzelne Bauelemente auszuwechseln, ohne dass andere Bauelemente entfernt werden müssen.

Noch eine weitere Aufgabe der Erfindung ist es, ein Bauelement zur Verfügung zu stellen, das ohne zusätzliche, separate Dichtelemente aus Kunststoff aufkommt.

Ebenfalls eine Aufgabe der Erfindung ist es, ein Bauelement zur Verfügung zu stellen, welches von einer einzelnen Person montiert werden kann, selbst wenn es grössere Dimensionen hat. Die Arbeitssicherheit soll dabei höher sein als bei herkömmlichen Bauelementen.

Eine weitere Aufgabe der Erfindung ist es, Bauelemente zur Verfügung zu stellen, mit welchem Dächer und Fassaden regendicht abgedeckt werden können, wobei ein möglichst geringer Materialverbrauch anfällt.

Ein erfindungsgemässes Bauelement soll auch in kleineren Serien kostengünstig herstellbar sein.

Diese und andere Aufgaben werden gelöst durch ein erfindungsgemässes Bauelement gemäss Anspruch 1. Weitere bevorzugte Ausführungsformen sind in den abhängigen Ansprüchen gegeben.

### Darstellung der Erfindung

Ein erfindungsgemässes Bauelement gemäß Anspruch 1 ist vorgesehen zur regendichten Verkleidung einer Gebäudeaussenfläche, insbesondere eines Schrägdaches oder einer Fassade, mit einer Mehrzahl überlappender Bauelemente. Das Bauelement umfasst einen Rahmen und ein in oder auf diesem Rahmen befestigtes Paneel auf. Der Rahmen weist ein oberes Profil mit zwei oder mehr zur äusseren Witterungsseite hin ragenden Dichtlippen und ein unteres Profil mit zwei oder mehr von der Witterungsseite weg nach innen hin ragenden Dichtlippen auf. Die oberen beziehungsweise unteren Profile sind so ausgestaltet, dass sie mit einem unteren beziehungsweise oberen Profil eines benachbarten baugleichen Bauelements in Eingriff bringbar sind, so dass sich eine Labyrinthdichtung ergibt.

Regendicht bedeutet in diesem Zusammenhang der beschriebenen Erfindung nicht absolut wasserdicht, sondern dicht gegen das Eindringen von Wasser aufgrund äusserer Witterungsseinflüsse, insbesondere Regen.

Vorzugsweise kommen die unteren und oberen Profile direkt benachbarter Bauelemente, insbesondere die Dichtlippen, nicht miteinander in Kontakt. Sie weisen ein stattdessen ein gewisses Spiel auf, so dass sich bei einer Längenausdehnung der Bauelemente aufgrund eines Temperaturwechsels keine mechanischen Spannungen aufbauen können. Dies ist bei Bauelementen mit Photovoltaik-Paneelen besonders wichtig, da sie sich aufgrund der dunklen Farbgebung besonders schnell erhitzen und abkühlen, so dass über den Verlauf eines Tages eine erhebliche Längenveränderung resultieren kann.

Da keine weiteren dichtenden Elemente vorhanden sind, wie beispielsweise Kunststoffdichtungen, die unter den harschen Witterungsbedingungen auf einem Dach relativ schnell altern, müssen die Bauelemente nur sehr selten, wenn überhaupt, gewartet oder saniert werden.

Das Paneel ist im Rahmen vorzugsweise dichtend gehalten. Das genannte Paneel kann ein Photovoltaikmodul sein, oder ein Sonnenkollektor-Modul zur Gewinnung von Warmwasser, oder aber auch eine einfache Abdeckung ohne weitere Funktion, beispielsweise aus Metallblech, Glas, oder transparentem Kunststoff.

Die Labyrinthdichtung, bei der die Dichtlippen der ineinander greifenden Profile abwechseln angeordnet sind, verhindert, dass in Fallrichtung über das Dach abfliessendes Wasser unter die Bauelemente gelangt. Es verhindert zudem auch effizient das Eindringen von Nebel oder Sprühwasser, und fängt Kondenswasser auf.

In dem erfindungsgemässen Bauelement ist das obere und das untere Profil des Rahmens derart ausgestaltet, dass das obere Profil durch eine Schwenkbewegung entlang einer Schwenkachse parallel zu einer oberen Kante des Bauelements mit einem unteren Profil eines oberhalb des Bauelements auf einer Unterkonstruktion montierten baugleichen Bauelements in Eingriff bringbar ist.

Derart ausgestaltete erfindungsgemässe Bauelemente können auf diese Weise von oben, vom First her, nach unten Richtung Traufe montiert werden, wobei bereits montierte Bauelemente nicht gelöst, verschoben oder angehoben werden müssen. Ein Monteur kann bei der Montage von unterhalb des bedeckten Daches arbeiten, und dabei eine vergleichsweise bequeme Haltung und einen sicheren Stand einnehmen. Es besteht zudem ein verringertes Risiko, bereits montierte Bauelemente versehentlich zu beschädigen.

Vorteilhaft weist der Rahmen eines ein erfindungsgemässen Bauelements zwei seitliche Profile auf, mit zwei oder mehr nach innen ragenden Dichtlippen.

Das Paneel kann in einer U-förmigen Nut des Rahmens und/oder auf einer Montagefläche des Rahmens angeordnet sein.

Vorteilhaft bilden das Paneel und der Rahmen des Bauelements eine im wesentlichen wasserdichte Oberfläche.

In einer Ausführungsform eines erfindungsgemässen Bauelements weist das obere Profil mindestens eine waagrechte Ablaufrinne auf.

Das Paneel eines erfindungsgemässen Bauelements kann beispielsweise ein Photovoltaik-Modul oder ein Sonnen-Kollektor-Modul sein.

In einer anderen vorteilhaften Ausführungsform eines erfindungsgemässen Bauelements ist dieses Bauelement modular aus einzelnen, nach Bedarf kombinierbaren Teilen aufgebaut.

Eine erfindungsgemässe Gebäudeverkleidung, insbesondere für ein Schrägdach, weist eine Mehrzahl von solchen erfindungsgemässen Bauelementen auf.

Ein erfindungsgemässes Schrägdach und eine erfindungsgemässe Gebäudefassade weisen wie oder mehr erfindungsgemässe Bauelementen auf.

Eine erfindungsgemässe Energieerzeugungsanlage, insbesondere eine Photovoltaik-Anlage oder eine Sonnen-Kollektor-Anlage, weisen ein oder mehr erfindungsgemässe Bauelemente auf.

Bei dem erfindungsgemässen Verfahren gemäß Anspruchs 15 zur Herstellung eines Bauelements wird ein Rahmen mit einer umlaufenden Montagefläche bereitgestellt. Anschliessend wird ein Paneel auf der Montagefläche des Rahmens angeordnet, und zwischen einer Aussenkante und dem Rand des Paneels eine Dichtung angebracht. Die Dichtung bildet mit dem Rahmen und dem Paneel eine wasserdichte Oberfläche des Bauelements.

### Kurze Beschreibung der Zeichnungen

Im Folgenden wird das erfindungsgemässe Bauelement anhand von Zeichnungen erläutert, die jedoch lediglich Ausführungsbeispiele zeigen.
- Figur 1: zeigt in perspektivischer Ansicht eine mögliche Ausführungsform eines erfindungsgemässen Bauelements (das Tragelement ist nicht dargestellt).

- Figur 2: zeigt in einem Längsschnitt in Fallrichtung den überlappenden Randbereich zweier erfindungsgemässer Bauelemente gemäss Figur 1, im fertig montierten Zustand.
- Figur 3: zeigt das erfindungsgemässe Bauelement aus Figur 1 in einer Explosionsdarstellung.
- Figur 4: zeigt einen Querschnitt durch ein erfindungsgemässes Bauelement, mit zwei benachbarten Bauelementen.
- Figur 5: zeigt im Längsschnitt die Montage eines erfindungsgemässen Bauelements unterhalb eines anderen Bauelements mittels einer Schwenkbewegung.
- Figur 6: zeigt eine weitere Ausführungsform des erfindungsgemässen Bauelements, mit einem zusätzlichen Abstandshalter.
- Figur 7: zeigt eine Aufsicht auf ein mit erfindungsgemässen Bauelementen bedecktes Dach.
- Figur 8: zeigt noch eine weitere Ausführungsform des erfindungsgemässen Bauelements, mit einer alternativen Befestigung des Paneels im Rahmen.

### Ausführung der Erfindung

Die im Folgenden gegebenen Beispiele werden zur besseren Veranschaulichung der vorliegenden Erfindung gegeben, sind jedoch nicht dazu geeignet, die Erfindung auf die hierin offenbarten Merkmale zu beschränken.

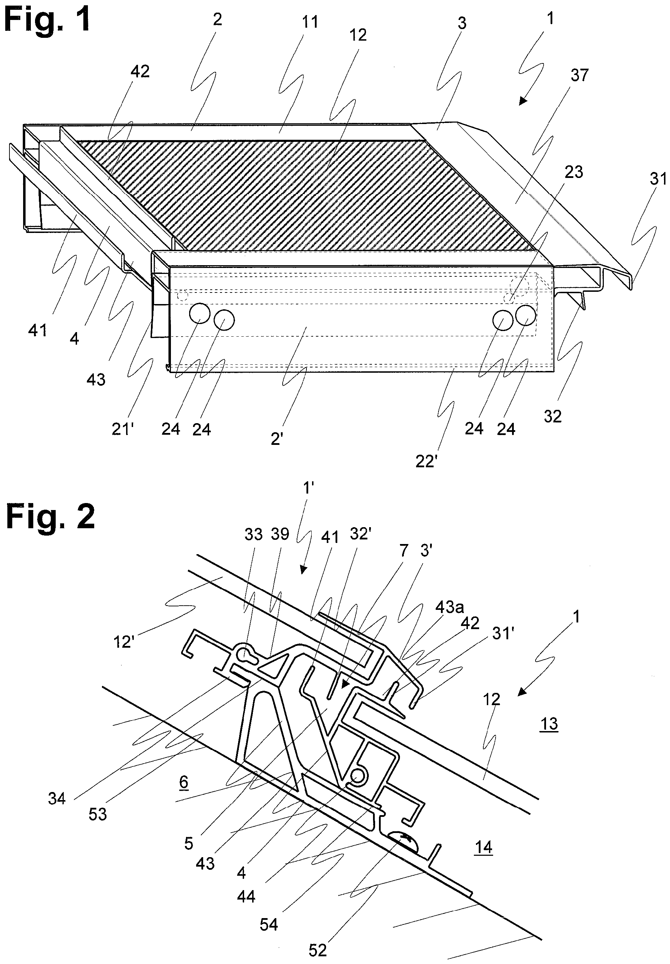

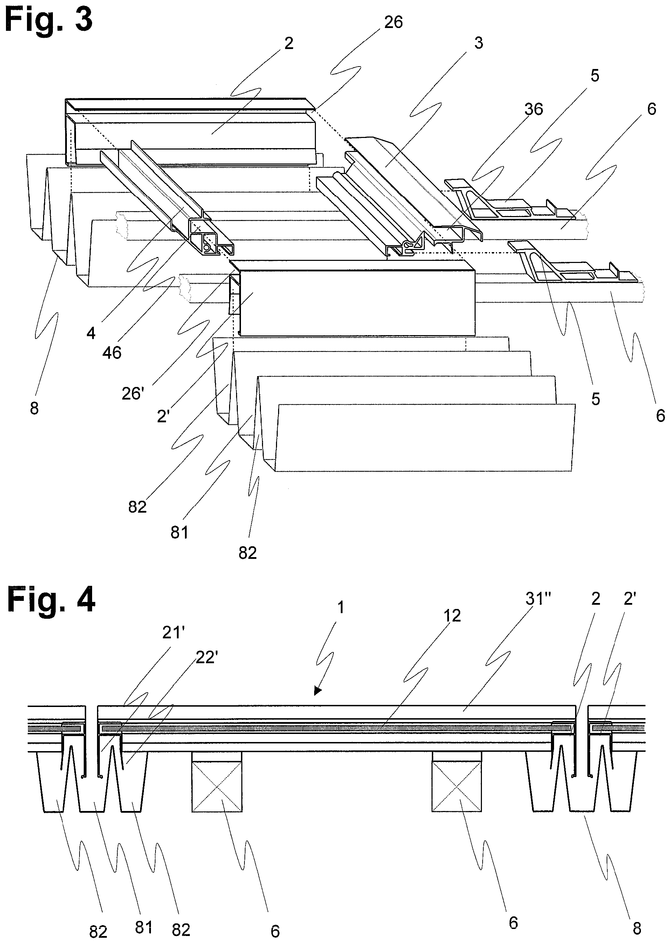

Eine beispielhafte Ausführungsform eines erfindungsgemässen Bauelements 1 ist in Figur 1 dargestellt (das Tragelement ist nicht dargestellt). Figur 3 zeigt das gleiche Bauelement in einer Explosionsdarstellung, mit weggelassenem Paneel. Ein rechteckiges Paneel 12 wird auf allen vier Seiten von einem umlaufenden Rahmen 11 gehalten. Damit ein Eindringen von Feuchtigkeit und Wasser verhindert wird, ist die Verbindung zwischen Rahmen und Paneel abgedichtet. Die Dichtung zwischen Rahmen und Paneel kann dabei eine Silikongummi-Dichtung oder eine umlaufende Dichtlippe aus einem geeigneten Elastomer sein. Der Rahmen 11 besteht im wesentlichen aus vier Rahmenprofilen 2, 2', 3, 4, welche eine gegen das Zentrum gerichtete U-förmige Nut aufweisen, in der das Paneel dichtend gelagert ist. Die Rahmenprofile sind vorzugsweise aus Leichtmetall im Stranggussverfahren gefertigt. Um den Rahmen zu bilden, werden die Profile vorzugsweise miteinander verschraubt, wobei für diesen Zweck im gezeigten Ausführungsbeispiel Zugriffsöffnungen 24 für ein Werkzeug vorgesehen sind. Alternativ sind andere Befestigungstechniken denkbar, beispielsweise Löten, Kleben, Schweissen oder Nieten.

Der Aufbau des Rahmens aus einfachen Rahmenprofilen hat neben reduzierten Kosten auch den Vorteil, dass durch einfaches Ablängen der Profile sehr schnell der Rahmen für ein Paneel beliebiger Grösse gefertigt werden kann. Auf diese Weise können zum einen spezielle Dimensionierungswünsche ohne zusätzliche Kosten berücksichtigt werden, und zum anderen können zugekaufte Photovoltaik-Module sehr einfach in einem erfindungsgemässen Bauelement verbaut werden. Da zudem die Ecken des Bauelements im verbauten Zustand nicht einsehbar sind, kann auf aufwendige Eckabschlüsse verzichtet werden. Sollte zu einem späteren Zeitpunkt der Ersatz eines Bauelements notwendig werden, die entsprechenden Rahmenprofile aber nicht mehr zur Verfügung stehen, so kann auch das zu ersetzende Bauelement zerlegt, das Paneel ersetzt, und mit den alten Rahmenprofilen wieder zu einem neuen Bauelement zusammengefügt werden.

Die Dimensionen des vergleichsweise klein dimensionierten Bauelements in Figur 1 ist nur als Beispiel zu verstehen. Moderne Photovoltaik-Paneele weisen wesentlich grössere Dimensionen auf, beispielsweise 80 cm X 160 cm.

Die beiden seitlichen Profile 2, 2' weisen eine U-förmige Nut zur Aufnahme des Panels 12 sowie eine innere 22 und eine äussere 21 Dichtlippe auf. Die beiden Profile 2, 2' sind identisch, und unterscheiden sich lediglich in ihrer Ausrichtung im Bezug auf das Bauelement. Bei einem fertig montierten Bauelement verlaufen die seitlichen Profile in Fallrichtung. An einem oberen Ende des Bauelements 1 ist ein oberes Profil 4 angeordnet, mit zwei zur äusseren Seite des Bauelements gerichteten Dichtlippen 41, 42. Die äussere, am Rand gelegene Dichtlippe 41 schliesst dabei eine waagrechte Auffangrinne 43 ab, welche später das sich in der Labyrinthdichtung aufgefangene Kondenswasser und Sprühwasser zur Seite hin abführt.

Das an einem unteren Ende des Bauelements gelegene untere Profil 3 weist eine Abdeckung 37 auf, sowie zwei zur inneren Seite des Bauelements gerichtete Dichtlippen 31 und 32.

Die äussere, am Rand gelegene Dichtlippe 41 kann auch kürzer sein als im dargestellten Beispiel, solange sichergestellt ist, dass die waagrechte Auffangrinne 43 Spritzwasser oder Kondenswasser auffangen kann, welches an der Dichtlippe 32' herab rinnt.

Auf der Innenseite des Bauteils kann es auf der Rückseite des Paneels 12 zu Kondenswasserbildung kommen. Dieses läuft auf der Rückseite nach unten, ums schliesslich am unteren Ende in eine waagrechte Ablaufrinne 39 des unteren Profils 3' zu fliessen, von wo es zur Seite abgeführt wird.

Je nach Aufbau der Rahmenprofile kann Wasser in den waagrechten Ablaufrinnen 43, 43a, 39 auf der Seite in den in Fallrichtung verlaufenden Ablaufkanal 8 abfliessen. Gegebenenfalls können auch Öffnungen im seitlichen Profil oder an den Längsenden der Ablaufrinnen 43, 43a, 39 vorhanden sein, durch die das gesammelte Wasser in den Ablaufkanal 8 abfliessen kann.

Im gezeigten Ausführungsbeispiel verläuft das untere Profil 3 über die gesamte Breite des Bauelements, während das obere Profil 4 von den beiden seitlichen Profilen 2, 2' flankiert wird. Alternativ kann auch das untere Profil zwischen den beiden seitlichen Profilen verlaufen, oder beide 3, 4 Profile über die gesamte Breite verlaufen. Andere Kombinationen sind ebenfalls denkbar, da die dichtende Wirkung in jedem Fall gegeben ist.

Das Dichtungsprinzip des erfindungsgemässen Bauelements wird insbesondere ersichtlich in Figur 2, die einen Längsschnitt in Fallrichtung durch den überlappenden Randbereich zweier fertig montierter erfindungsgemässer Bauelemente 1, 1' zeigt. Auf einer schrägen Unterkonstruktion 6 eines Schrägdaches, in der Regel eine in Fallrichtung verlaufende Dachlatte, ist ein Tragelement 5 angeordnet, welches mit einem oder mehreren Befestigungsmitteln 52, beispielsweise einer Schraube oder einem Nagel, an der Dachlatte befestigt ist. Das Trageelement verfügt über eine erste Auflagefläche 53 und eine zweite Auflagefläche 54. Das untere Profil 3' den oben liegenden Bauelements 1' liegt auf der ersten Auflagefläche 53 auf. Die Auflagefläche 53 läuft nach schräg oben in einen überstehenden Bereich aus, der in einer Haltenut 34 des unteren Profils 3' angeordnet ist. Unteres Profil 3' und Trageelement 5 sind somit formschlüssig soweit verbunden, dass ein Abrutschen des Bauelements nicht möglich ist. Um das Bauelement vom Trageelement 5 zu trennen, muss das Bauelement 1' entgegen der Schwerkraft nach oben geschoben werden.

Das Tragelement 5 ist vorzugsweise aus Metall angefertigt. Dies hat neben Stabilitätsgründen den Vorteil, dass die Massen der Bauelemente elektrisch verbunden sind. Das Tragelement 5 kann alternativ auch einstückig als Teil des unteren Profils 3 geformt sein. Da bei einer Längenausdehnung des Bauelements das obere Profil 4 auf der zweiten Auflagefläche 52 gleitet, sollten die beiden Flächen möglichst glatt sein, um mechanische Spannungen zu vermeiden. Alternativ kann auch eine spezielle Gleitfläche, beispielsweise aus Polytetrafluoroethylen (Teflon) oder High-Density-Polyethylen vorgesehen sein.

Ersichtlich sind auch die Schraublöcher 33, 44 in den Profilen 3', 4, mit denen die nicht dargestellten seitlichen Profile mit Schrauben mit den unteren und oberen Profilen 3, 4 verbunden werden. Die Paneele 12, 12' der beiden gezeigten Bauelemente sind in den U-förmigen Nuten 36, 46 der Profile 3', 4 gehalten. Die Silikondichtung zwischen Paneel und Nut ist nicht dargestellt. Bei Regen läuft nun das über das Dach abfliessendes Wasser über das Paneel 12' eines oberen Bauelements, von dort auf die Abdeckung 37 des unteren Profils 3', und über die äussere Dichtlippe 31' auf das Paneel 12 des unten liegenden Bauelements, usw.

Die sich vorzugsweise nicht berührenden Dichtlippen 31', 42, 32', 41 bilden eine Labyrinthdichtung 7, die den Luftaustausch zwischen aussen 13 und innen 14 und somit auch das Eindringen von Feuchtigkeit unter die Dachhaut minimiert. Labyrinthdichtungen sind per Definition nicht absolut gasdicht, sondern erhöhen den Fliesswiderstand eines Fluids, hier also der Luft, über ein gewünschtes Niveau, so dass der gewünschte relative Dichtungseffekt resultiert. Spritzwasser wird von der Labyrinthdichtung des erfindungsgemässen Bauteils ebenfalls erfolgreich zurückgehalten. Da der Abstand zwischen den beiden Profilen 3', 4 zwar gering, aber immer noch zu gross ist für einen Kapillareffekt, kann auch kein flüssiges Wasser entgegen der Schwerkraft unter die Dachhaut dringen. Das obere Profil 4 weist zwischen den beiden Dichtlippen waagrechte Auffangrinnen 43, 43a auf, welche gegebenenfalls trotzdem vorhandenes Wasser, z.B. aufgrund von kondensierter Feuchtigkeit, zur Seite hin wegleiten. Wichtig für die Betriebssicherheit einer Gebäudeverkleidung, insbesondere eines Daches, ist weiter, dass auch bei sehr starken Winden keine Luftströmung unter die Bauelemente gelangen kann, weil sonst das Dach durch den Wind zerstört werden kann. Aufgrund der engen Spaltbreite der Labyrinthdichtung ist dies jedoch auch bei direkter Anströmung mit sehr starken Winden nicht möglich. Zu diesem Zweck sind auch die äusseren Dichtlippen 21, 21' der seitlichen Profile 2, 2' an ihrem unteren Ende mit einer seitlichen Lippe versehen, welche die seitliche Abdichtung erhöht (vgl. Figur 4). Die gezeigte Ausgestaltung der Labyrinthdichtung ist nur beispielhaft zu verstehen. Es ist natürlich möglich, die konkrete Ausführung anzupassen. So ist es beispielsweise auch möglich, die Anzahl der Dichtlippen zu erhöhen.

Im gezeigten Ausführungsbeispiel eines erfindungsgemässen Bauelements ist das Paneel 12 in den U-förmigen Nuten 26, 26', 36, 46 formschlüssig gehalten. Alternativ wäre es jedoch auch denkbar, dass Paneel mit dem Rahmen auf andere Weise zu verbinden, beispielsweise durch Verschrauben oder Verkleben.

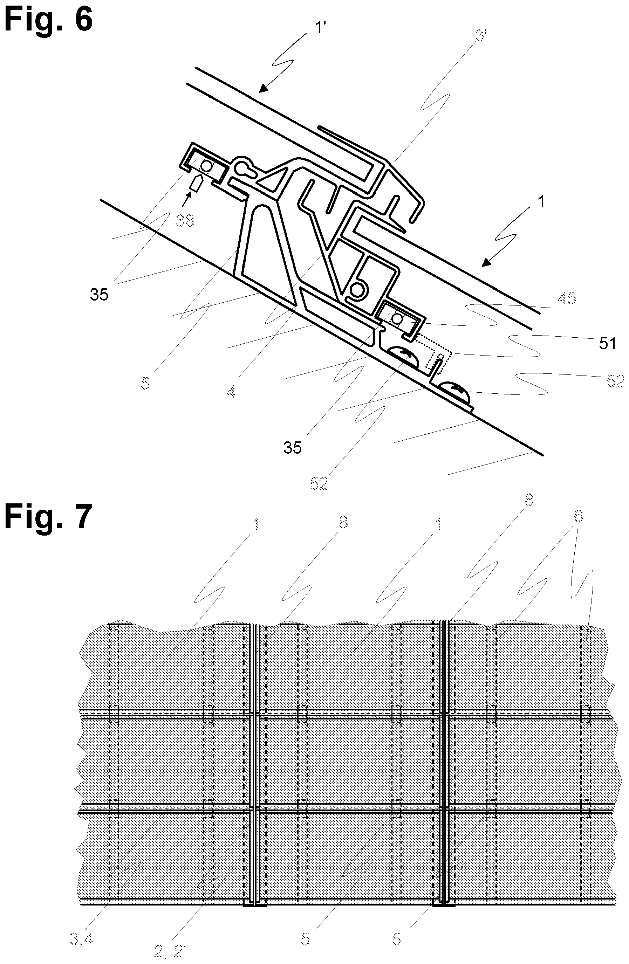

Analog zur Labyrinthdichtung zwischen den oberen und unteren Profilen zweier in Fallrichtung benachbarter Bauelemente wird bei den seitlichen Profilen eine Labyrinthdichtung gebildet, wie aus dem Querschnitt in Figur 4 ersichtlich ist. Im Grenzbereich zweier benachbarter Bauelemente ist unterhalb des resultierendes Spalts zwischen den beiden seitlichen Profilen 2, 2' ein Abflusskanal 8 angeordnet, welcher in Fallrichtung durchgehend von First zur Traufe verläuft. Damit im Zusammenspiel mit den inneren 22 und äusseren 21 Dichtlippen der seitlichen Profile 2, 2' wiederum ein Labyrinthprofil entsteht, verfügt der Abflusskanal 8 über drei benachbarte Abflussrinnen. Die äusseren Abflussrinnen 82 dienen dabei gleichzeitig auch dem Abtransport des Konsenswassers, welches sich innerhalb der Labyrinthdichtungen bildet. Die Dichtlippen 21, 22 der seitlichen Profile sind so geformt, dass sich lediglich eine minimale Spaltbreite ergibt. Der Abflusskanal kann durch Falten eines Bleches kostengünstig hergestellt werden, aber auch die Verwendung von Kunststoff- oder Metallprofilen sind denkbar. Ein mit erfindungsgemässen Bauelementen bedecktes Dach ist in Figur 7 gezeigt.

Um erfindungsgemässe Bauelemente beim Decken eines Daches vom First her nach unten verlegen zu können, ist es notwendig, die Dichtlippen des oberen Profils unter die Dichtlippen des unteren Profils des bereits montierten Bauteils zu bringen. Dies kann beispielsweise durch seitliches Einfädeln bewerkstelligt werden, oder durch ein vorübergehendes Abheben des bereits montierten Bauteils vom Tragelement.

Bei einer bevorzugten Variante eines erfindungsgemässen Bauteils wird das obere Profil durch eine Schwenkbewegung des zu montierenden Bauteils unter das fixierte untere Profil gebracht. Das obere 4 und untere 3 Profil des Rahmens 11 sind dazu derart ausgestaltet, dass das obere Profil 4 durch eine Schwenkbewegung entlang einer Schwenkachse parallel zu einer oberen Kante des Bauelements mit dem unteren Profil 3' des oberhalb des Bauelements 1 auf der Unterkonstruktion 6 montierten baugleichen Bauelements 1' in Eingriff bringbar ist.

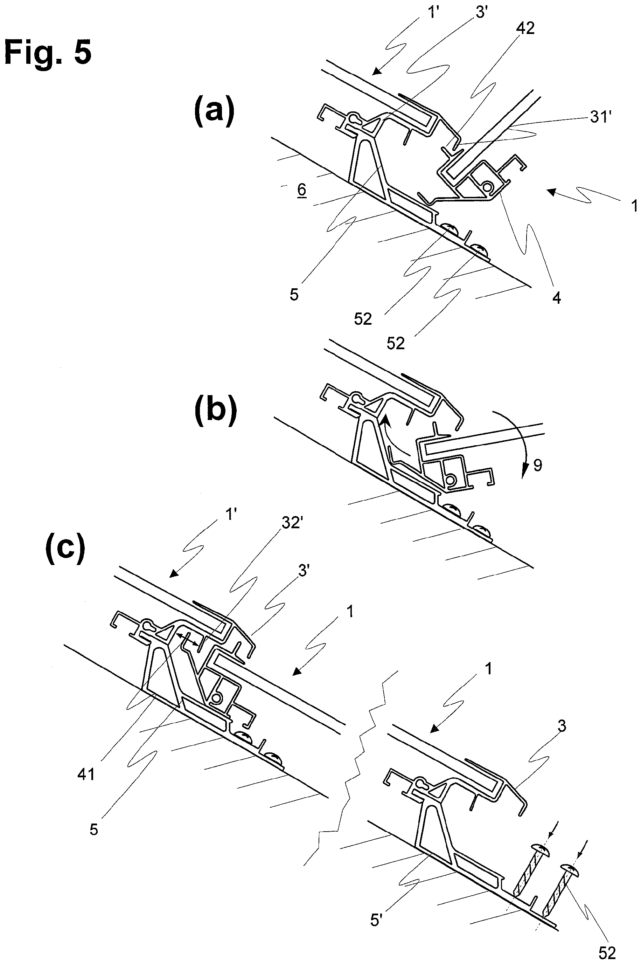

Der Ablauf des Montagevorgangs einer solchen bevorzugten Ausführungsform eines erfindungsgemässen Bauteils ist in Figur 5 in drei Schritten dargestellt. In einem ersten Schritt, Figur 5(a), wird das zu montierende Bauteil 1 in zum First hin verkippter Stellung auf das Tragelement 5 abgelegt. Die innere Dichtlippe 42 des oberen Profils kann so unter die äussere Dichtlippe 31' geschoben werden. Anschliessend wird in einem zweiten Schritt, Figur 5(b), mittels einer Schwenkbewegung 9 entlang einer Achse parallel zur oberen Kante des Bauelements, das obere Profil 4 mit dem unteren Profil 3' in Eingriff gebracht. Es resultiert die Labyrinthdichtung.

In einem dritten, abschliessenden Schritt, Figur 5(c), werden die Tragelemente 5' des zu montierenden Bauelements 1 auf der Unterkonstruktion 6 fixiert, im gezeigten Fall rechts in Figur 5(c) mittels zweier Schrauben 52. Die Tragelemente wurden zu diesem Zweck bereits vorab in die Haltenut 34 des unteren Profils 3 gesteckt, so dass der Monteur die Hände frei hat. Die Position des Trageelements 5' wird dabei so gewählt, dass in der neu entstandenen Labyrinthdichtung die Abstände der Dichtlippen zueinander geeignet sind. Da sich diese Abstände mit der Längenausdehnung des Bauelements bei Temperaturänderungen verändern, wird der korrekte Abstand vorteilhaft anhand der gerade herrschenden Umgebungstemperatur bestimmt, beispielsweise mit Hilfe einer Tabelle. Eine geeignete Methode ist beispielsweise, vor dem Montieren des Bauelements von den Tragelementen des oberhalb liegenden Bauelements nach unten zu messen.

Figur 6 zeigt eine Ausführungsform des erfindungsgemässen Bauelements, analog zu Figur 2, bei dem einige zusätzliche vorteilhafte Elemente vorhanden sind. So sind beispielsweise in zwei hinterschnittenen Nuten des oberen 4 und unteren 3' Profils blockförmige Einsätze 35, 45 angeordnet. Diese können aus einem kurzen Metallblock bestehen, welcher in die Längsenden der genannten Nuten eingeführt und anschliessend mit einer in einer durchgehenden Bohrung angeordneten Druckschraube 38 in der Nut verspannt wird. Gegen das Längsende des Profils hin ist im Metallblock 35, 45 eine weitere Bohrung angeordnet. Diese kann als Ersatz oder zusätzlich zum Schraubloch 33, 44 zur Verbindung der Profile zum Rahmen verwendet werden. Ebenfalls gezeigt ist ein optionaler Abstandshalter 51 (gestrichelt), welcher auf einer entsprechenden Lippe des Tragelements 5 aufgesteckt ist. Dieser vorzugsweise aus Kunststoff hergestellte Abstandshalter dient dazu, bei der Montage die Ausrichtung des zu montierenden Bauelements bzw. des noch zu befestigenden nächsten Tragelements 5' auf einfache Weise festzulegen. Es können verschieden dimensionierte Abstandselemente für verschiedene Fälle, beispielsweise für verschiedene Umgebungstemperaturen bei der Montage vorgesehen sein. Die Abstandselemente sind vorzugsweise so ausgestaltet, dass sie leicht abbrechen, wenn sich zum Beispiel das Bauelement bei einer Temperaturänderung zusammenzieht.

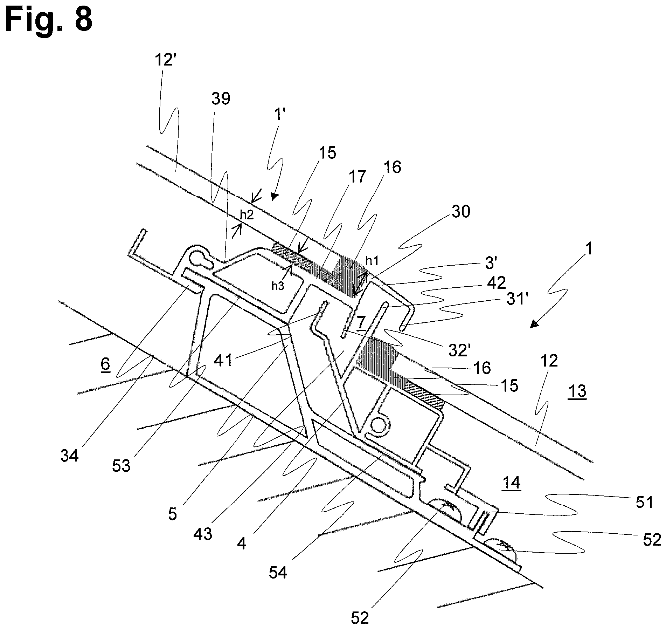

Eine weitere Ausführungsform eines erfindungsgemässen Bauelements 1 ist in Figur 8 gezeigt, in einem Längsschnitt analog zu Figur 2. Diese Variante unterscheidet sich gegenüber den Ausführungsformen von Bauelementen aus Figur 2 und 6 im Wesentlichen durch eine andere Befestigung des Paneels 12, 12' im Rahmen 11. Anstatt einer U-förmigen Nut weisen die Profile 2, 2', 3, 4 des Rahmens 11 eine Montagefläche 17 auf, auf der das Paneel montiert wird. Im gezeigten Beispiel wird auf der Montagefläche 17 ein Abstandselement 15 z.B. in Form einer Plastikleiste befestigt, beispielsweise durch Kleben. Auf dieser wiederum wird das Paneel 12 befestigt, beispielsweise ebenfalls durch Kleben. Anschliessend wir die verbleibende Fuge zwischen dem äusseren Profilrand und dem Rand des Paneels 12 mit einer geeigneten Dichtung 16 versehen. Beispielsweise kann die Fuge mit einer Dichtmasse wie z.B. einer Silikondichtmasse verfüllt werden. Es resultiert eine wasserdichte, im Wesentlichen plane äussere Oberfläche des erfindungsgemässen Bauelements 11, auf der Wasser problemlos abfliessen kann. Ein Eindringen von Wasser zur Innenseite 14 wird durch die Dichtung 16 verhindert.

Die in Figur 8 dargestellte Ausführungsform weist verschiedene zusätzliche Vorteile auf. So können beispielsweise Profile einer bestimmten Tiefe h1 mit Paneelen verschiedener Dicke h2 sehr leicht zu erfindungsgemässen Bauelementen 1 kombiniert werden, indem die Dicke h3 der Abstandselemente 15 so gewählt wird, dass die Oberfläche des Paneels 2 bündig ist mit der Aussenkante 30 des unteren Profils 3. Da das Paneel 12 nicht in eine U-förmige Nut des Rahmens 11 eingefädelt werden muss, kann der Rahmen 11 komplett vormontiert bereitgestellt werden, bevor das Paneel 12 angebracht werden muss. Erfindungsgemässe Bauelemente können so schnell und kostengünstig gefertigt werden, und eine automatisierte Produktion ist leicht möglich. Das Anbringen der Dichtmasse ist zudem besser kontrollierbar als bei einem U-Profil.

Für den firstseitigen Abschluss und den unteren Abschluss einer Abdeckung mit erfindungsgemässen Bauelementen können verschiedene speziell modifizierte erfindungsgemässe Bauelemente vorgesehen sein.

### Bezugszeichenliste

- 1: Bauelement
- 11: Rahmen
- 12: Paneel
- 13: Aussenseite des Bauelements, der Witterung zugewandt
- 14: Innenseite des Bauelements, der Witterung abgewandt
- 15: Abstandshalter
- 16: Dichtung
- 17: Montagefläche
- 2, 2': seitliches Profil
- 21, 21': innere Lippe
- 22, 22': äussere Lippe
- 23: Bohrloch
- 24: Zugriffsöffnung
- 26, 26': U-förmige Nut
- 3, 3': unteres Profil
- 30: Aussenkante
- 31, 31': äussere Lippe
- 32, 32': innere Lippe
- 33: Schraubloch
- 34: Haltenut
- 35: Einsatz
- 36: U-förmige Nut
- 37: Abdeckung
- 38: Druckschraube
- 39: waagrechte Ablaufrinne
- 4, 4': oberes Profil
- 41: äussere Lippe
- 42: innere Lippe
- 43, 43a: waagrechte Auffangrinne
- 44: Schraubloch
- 45: Einsatz
- 46: U-förmige Nut
- 5: Tragelement
- 51: Abstandshalter
- 52: Befestigungsmittel
- 53: erste Auflagefläche
- 54: zweite Auflagefläche
- 6: Unterkonstruktion, Dachlatte
- 7: Labyrinthdichtung
- 8: Abflusskanal
- 81: innere Rinne
- 82: äussere Rinne
- 9: Schwenkbewegung
- h1: Tiefe des Profils
- h2: Dicke des Paneels
- h3: Dicke des Abstandselements

## Patentansprüche

1. Bauelement (1) mit einem Tragelement (5) zur Fixierung des Bauelements (1) auf einer Unterkonstruktion (6) zur regendichten Verkleidung einer Gebäudeaussenfläche, insbesondere eines Schrägdaches oder einer Fassade, mit einer Mehrzahl überlappender Bauelemente (1, 1'), wobei das Bauelement (1) einen Rahmen (11) und ein in oder auf diesem Rahmen befestigtes Paneel (12) aufweist, und der Rahmen (11) ein oberes Profil (4) mit zwei oder mehr zur äusseren Witterungsseite (13) hin ragenden Dichtlippen (41, 42) und ein unteres Profil (3) mit zwei oder mehr von der Witterungsseite (13) weg nach innen (14) hin ragenden Dichtlippen (31, 32) aufweist, welche so ausgestaltet sind, dass sie mit einem unteren (3') beziehungsweise oberen (4') Profil eines benachbarten baugleichen Bauelements (1') in Eingriff bringbar sind, so dass sich eine Labyrinthdichtung (7) ergibt,
**dadurch gekennzeichnet, dass** das Trageelement (5) eine erste Auflagefläche (53) aufweist, welche als Auflagefläche für das untere Profil (3) des Bauelements (1) vorgesehen ist, sowie eine zweite Auflagefläche (54), welche als Auflagefläche für das obere Profil (4') eines benachbarten baugleichen Bauelements (1') vorgesehen ist, und
dass das obere (4) und untere (3) Profil des Rahmens (11) derart ausgestaltet sind, dass das obere Profil (4) durch eine Schwenkbewegung entlang einer Schwenkachse parallel zu einer oberen Kante des Bauelements mit einem unteren Profil (3') eines oberhalb des Bauelements (1) auf der Unterkonstruktion (6) montierten baugleichen Bauelements (1') in Eingriff bringbar ist.

2. Bauelement nach Anspruch 1, **dadurch gekennzeichnet, dass** die unteren und oberen Profile (3, 4', 3', 4) zweier benachbarter Bauelemente (1, 1') nicht in direkten Kontakt kommen können.

3. Bauelement nach Anspruch 1 oder 2, **dadurch gekennzeichnet, dass** das Tragelement (5) lösbar oder unlösbar mit dem unteren Profil (3) verbunden ist oder verbunden werden kann.

4. Bauelement nach Anspruch 3, **dadurch gekennzeichnet, dass** das das untere Profil (3) eine Haltenut (34) aufweist zur formschlüssigen Verbindung mit einem überstehenden Bereich der ersten Auflagefläche (53).

5. Bauelement nach einem der vorangehenden Ansprüche, **dadurch gekennzeichnet, dass** das Trageelement (5) eine Lippe aufweist, welche zum Aufstecken eines Abstandshalters (51) vorgesehen ist.

6. Bauelement nach einem der vorangehenden Ansprüche, **dadurch gekennzeichnet, dass** das Paneel (12) in einer U-förmigen Nut (26, 26', 36, 46) des Rahmens (11) angeordnet ist.

7. Bauelement nach einem der vorangehenden Ansprüche, **dadurch gekennzeichnet, dass** das Paneel (12) auf einer Montagefläche (17) des Rahmens (11) angeordnet ist.

8. Bauelement nach einem der vorangehenden Ansprüche, **dadurch gekennzeichnet, dass** das obere Profil (4) mindestens eine waagrechte Ablaufrinne (43, 43a) aufweist.

9. Bauelement nach einem der vorangehenden Ansprüche, **dadurch gekennzeichnet, dass** das Paneel (12) ein Photovoltaik-Modul oder ein Sonnen-Kollektor-Modul ist.

10. Bauelement nach einem der vorangehenden Ansprüche, **dadurch gekennzeichnet, dass** das Bauelement (1) modular aus einzelnen, nach Bedarf kombinierbaren Teilen (2, 2', 3, 4, 12) aufgebaut ist.

11. Gebäudeverkleidung, insbesondere für ein Schrägdach, mit einer Mehrzahl von Bauelementen (1) nach einem der Ansprüche 1 bis 10.

12. Schrägdach mit zwei oder mehr Bauelementen (1) nach einem der Ansprüche 1 bis 10.

13. Gebäudefassade mit zwei oder mehr Bauelementen (1) nach einem der Ansprüche 1 bis 10.

14. Energieerzeugungsanlage, insbesondere eine Photovoltaik-Anlage oder eine Sonnen-Kollektor-Anlage, mit einem oder mehr Bauelementen (1) nach einem der Ansprüche 1 bis 10.

15. Verfahren zur Herstellung eines Bauelements (1) nach einem der Ansprüche 1 bis 10 mit einem Rahmen (11) mit Profilen (2, 2', 3, 4) einer bestimmten Tiefe (h1) und einem Paneel (12) mit einer bestimmten Dicke (h2), zur regendichten Verkleidung einer Gebäudeaussenfläche, **dadurch gekennzeichnet, dass** der Rahmen (11) mit einer umlaufenden Montagefläche (17) bereitgestellt wird, auf der Montagefläche (17) Abstandselemente (15) mit einer Dicke (h3) befestigt werden, das Paneel (12) auf den Abstandselementen (15) befestigt wird, und zwischen einer Aussenkante (30) und dem Rand des Paneels (12) eine Dichtung (16) angebracht wird, welche mit dem Rahmen (11) und dem Paneel (12) eine wasserdichte Oberfläche des Bauelements (1) bildet, wobei die Dicke (h3) der Abstandselemente (15) so gewählt wird, dass die Oberfläche des Paneels (2) bündig ist mit der Aussenkante (30) des unteren Profils (3) des Rahmens (11).

## Claims

1. Structural element (1) with a supporting element (5) for fixing the structural element (1) on a substructure (6) for the rainproof cladding of an exterior building surface, in particular of a pitched roof or of a façade, having a plurality of overlapping structural elements (1, 1'), wherein the structural element (1) has a frame (11) and a panel (12), which is fastened in or on said frame, and the frame (11) has an upper profile (4), with two or more sealing lips (41, 42) projecting in the direction of the exterior, weather-facing side (13), and a lower profile (3), with two or more sealing lips (31, 32) projecting inwards (14) away from the weather-facing side (13), said profiles being configured such that they can be brought into engagement with a lower profile (3') and an upper profile (4'), respectively, of an adjacent identical structural element (1'), this resulting in the formation of a labyrinth seal (7),
**characterized in that**
the supporting element (5) has a first contact area (53), which is provided in the form of a contact area for the lower profile (3) of the structural element (1), and a second contact area (54), which is provided in the form of a contact area for the upper profile (4') of an adjacent identical structural element (1'), and
**in that**
the upper profile (4) and lower profile (3) of the frame (11) are configured such that, by virtue of being pivoted along a pivot axis parallel to an upper edge of the structural element, the upper profile (4) can be brought into engagement with a lower profile (3') of an identical structural element (1') installed above the structural element (1) on the substructure (6).

2. Structural element according to Claim 1, **characterized in that** the lower and upper profiles (3, 4', 3', 4) of two adjacent structural elements (1, 1') cannot come into direct contact.

3. Structural element according to Claim 1 or 2, **characterized in that** the supporting element (5) is, or can be, connected to the lower profile (3) in a releasable or non-releasable manner.

4. Structural element according to Claim 3, **characterized in that** the lower profile (3) has a retaining groove (34) for form-fitting connection to a projecting region of the first contact area (53) .

5. Structural element according to one of the preceding claims, **characterized in that** the supporting element (5) has a lip provided to fit a spacer (51).

6. Structural element according to one of the preceding claims, **characterized in that** the panel (12) is arranged in a U-shaped groove (26, 26', 36, 46) of the frame (11).

7. Structural element according to one of the preceding claims, **characterized in that** the panel (12) is arranged on an installation surface (17) of the frame (11).

8. Structural element according to one of the preceding claims, **characterized in that** the upper profile (4) has at least one horizontal drainage channel (43, 43a).

9. Structural element according to one of the preceding claims, **characterized in that** the panel (12) is a photovoltaic module or a solar collector module.

10. Structural element according to one of the preceding claims, **characterized in that** the structural element (1) is constructed in modular fashion from individual parts (2, 2', 3, 4, 12) which can be combined as required.

11. Building cladding, in particular for a pitched roof, having a plurality of structural elements (1) according to one of Claims 1 to 10.

12. Pitched roof having two or more structural elements (1) according to one of Claims 1 to 10.

13. Building façade having two or more structural elements (1) according to one of Claims 1 to 10.

14. Power-generating plant, in particular a photovoltaic power plant or a solar collector plant, having one or more structural elements (1) according to one of Claims 1 to 10.

15. Method for producing a structural element (1) according to one of Claims 1 to 10, having a frame (11) with profiles (2, 2', 3, 4) of a certain depth (h1) and a panel (12) of a certain thickness (h2), for the rainproof cladding of an exterior building surface, **characterized in that** the frame (11) is supplied with a circumferential installation surface (17), spacer elements (15) of a thickness (h3) are fastened on the installation surface (17), the panel (12) is fastened on the spacer elements (15), and a seal (16) is fitted between an outer edge (30) and the periphery of the panel (12), said seal forming, along with the frame (11) and the panel (12), a water-tight surface of the structural element (1), wherein the thickness (h3) of the spacer elements (15) is selected such that the surface of the panel (2) is flush with the outer edge (30) of the lower profile (3) of the frame (11) .

## Revendications

1. Elément de construction (1) avec un élément de support (5) pour la fixation de l'élément de construction (1) sur une base (6) afin du revêtement étanche à la pluie d'une face extérieure de bâtiment, en particulier d'une toiture en pente ou d'une façade, avec une multiplicité d'éléments de construction à chevauchement (1, 1'), dans lequel l'élément de construction (1) présente un cadre (11) et un panneau (12) fixé dans ou sur ce cadre, et le cadre (11) présente un profil supérieur (4) avec deux ou plusieurs lèvres d'étanchéité (41, 42) orientées vers le côté extérieur exposé aux intempéries (13) et un profilé inférieur (3) avec deux ou plusieurs lèvres d'étanchéité (31, 32) orientées vers l'intérieur (14) à l'opposé du côté exposé aux intempéries (13), qui sont configurées de telle manière qu'elles puissent être engagées avec un profilé inférieur (3') ou supérieur (4') d'un élément de construction voisin (1') de même construction, de telle manière qu'il en résulte un joint à labyrinthe (7),
**caractérisé en ce que** l'élément de support (5) présente une première face d'appui (53), qui est prévue comme face d'appui pour le profilé inférieur (3) de l'élément de construction (1), ainsi qu'une seconde face d'appui (54), qui est prévue comme face d'appui pour le profilé supérieur (4') d'un élément de construction voisin (1') de même construction, et **en ce que** les profilés supérieur (4) et inférieur (3) du cadre (11) sont configurés de telle manière que le profilé supérieur (4) puisse être engagé avec un profilé inférieur (3') d'un élément de construction voisin (1') de même construction monté au-dessus de l'élément de construction (1) sur la base (6) par un mouvement de pivotement le long d'un axe de pivotement parallèle à un bord supérieur de l'élément de construction.

2. Elément de construction selon la revendication 1,
**caractérisé en ce que** les profilés inférieurs et supérieurs (3, 4', 3', 4) de deux éléments de construction voisins (1, 1') ne peuvent pas venir en contact direct.

3. Elément de construction selon la revendication 1 ou 2, **caractérisé en ce que** l'élément de support (5) est ou peut être assemblé au profilé inférieur (3) de façon séparable ou inséparable.

4. Elément de construction selon la revendication 3,
**caractérisé en ce que** le profilé inférieur (3) présente une rainure de retenue (34) pour l'assemblage par complémentarité de forme avec une zone saillante de la première face d'appui (53).

5. Elément de construction selon l'une quelconque des revendications précédentes, **caractérisé en ce que** l'élément de support (5) présente une lèvre, qui est prévue pour la pose d'une pièce d'écartement (51).

6. Elément de construction selon l'une quelconque des revendications précédentes, **caractérisé en ce que** le panneau (12) est disposé dans une rainure en forme de U (26, 26', 36, 46) du cadre (11).

7. Elément de construction selon l'une quelconque des revendications précédentes, **caractérisé en ce que** le panneau (12) est disposé sur une face de montage (17) du cadre (11).

8. Elément de construction selon l'une quelconque des revendications précédentes, **caractérisé en ce que** le profilé supérieur (4) présente au moins une rigole d'écoulement horizontale (43, 43a).

9. Elément de construction selon l'une quelconque des revendications précédentes, **caractérisé en ce que** le panneau (12) est un module photovoltaïque ou un module de collecteur solaire.

10. Elément de construction selon l'une quelconque des revendications précédentes, **caractérisé en ce que** l'élément de construction (1) est construit de façon modulaire à partir de pièces individuelles (2, 2', 3, 4, 12) combinables selon les besoins.

11. Revêtement de bâtiment, en particulier pour une toiture en pente, avec une multiplicité d'éléments de construction (1) selon l'une quelconque des revendications 1 à 10.

12. Toiture en pente avec deux ou plusieurs éléments de construction (1) selon l'une quelconque des revendications 1 à 10.

13. Façade de bâtiment avec deux ou plusieurs éléments de construction (1) selon l'une quelconque des revendications 1 à 10.

14. Installation de production d'énergie, en particulier installation photovoltaïque ou installation de collecteur solaire, avec un ou plusieurs élément(s) de construction (1) selon l'une quelconque des revendications 1 à 10.

15. Procédé de fabrication d'un élément de construction (1) selon l'une quelconque des revendications 1 à 10 avec un cadre (11) avec des profilés (2, 2', 3, 4) de profondeur déterminée (h1) et un panneau (2) avec une épaisseur déterminée (h2), afin du revêtement étanche à la pluie d'une face extérieure de bâtiment, **caractérisé en ce que**
le cadre (11) est préparé avec une face de montage périphérique (17),
des éléments d'écartement (15) d'épaisseur (h3) sont fixés sur la face de montage (17),
le panneau (12) est fixé sur les éléments d'écartement (15), et
un joint d'étanchéité (16) est placé entre un bord extérieur (30) et le bord du panneau (12), qui forme avec le cadre (11) et le panneau (12) une surface étanche à l'eau de l'élément de construction (1),
dans lequel l'épaisseur (h3) des éléments d'écartement (15) est choisie de telle manière que la surface du panneau (1) soit située à fleur du bord extérieur (30) du profilé inférieur (3) du cadre (11).
